# FASCICULE DE BREVET EUROPEEN

(11) **EP 3 153 566 B1**
(45) Date de publication et mention de la délivrance du brevet: **28.08.2019**
(21) Numéro de dépôt: 16192126.7
(22) Date de dépôt: 04.10.2016
(51) Int. Cl.: C10L 5/36, C10L 5/44, C10L 5/48

(54) **PROCEDE DE FABRICATION DE GRANULES COMBUSTIBLES**
HERSTELLUNGSVERFAHREN VON BRENNBAREN KÖRNCHEN
METHOD FOR MANUFACTURING FUEL PELLETS

(30) Priorité: 06.10.2015 FR 1559512
(43) Date de publication de la demande: 12.04.2017
(73) Titulaire: ROSADO, Jean-François, 59800 Lille (FR)
(72) Inventeur: ROSADO, Jean-François, 59800 LILLE (FR)
(74) Mandataire: Cabinet Plasseraud

(56) Documents cités:
- EP-A2- 1 867 703
- GEIR SKJEVRAK ET AL: "Pelletizing and Combustion Behaviors of Wood Waste with Additives Mixing", POWER AND ENERGY ENGINEERING CONFERENCE (APPEEC), 2012 ASIA-PACIFIC, IEEE, 27 mars 2012 (2012-03-27), pages 1-5, XP032239507, DOI: 10.1109/APPEEC.2012.6306992 ISBN: 978-1-4577-0545-8

## Description

L'invention concerne un procédé de fabrication de granulés, ainsi que des granulés, en tant que tels, obtenus par la mise en oeuvre du procédé de fabrication.

Le domaine de l'invention est celui des granulés bois utilisés comme combustibles, encore appelés granulés énergétiques. Ces granulés trouvent une application domestique comme combustibles pour les chaudières domestiques classiquement utilisées pour le chauffage de bâtiment.

De tels granulés trouvent encore une application particulière comme combustibles pour les industriels, et en particulier comme combustibles dans les chaudières de centrales thermiques pour la production d'électricité. Les granulés obtenus par la mise en oeuvre du procédé selon l'invention trouveront une application particulière comme combustibles dans de telles installations de combustion équipées d'un système de traitement des fumées.

Le document EP 1 867 703 décrit un procédé de fabrication de produits bois compressés, lesdits produits pouvant être des granulés. Le procédé comprend une première étape de broyage grossier de bois de déchets ou de bois vierge pour produire un mélange de particules grossières combustibles et non combustibles. la seconde étape consiste ensuite à séparer lesdites particules grossière afin de ne récupérer que les particules combustibles. Les particules combustibles sont ensuite broyées de manière à obtenir des particules fines qui sont ensuite compressées sous une forme adaptée pour l'utilisation en tant que combustible.

Le document "Pelletizing and Combustion Behaviors of Wood Waste with Additives Mixing" concerne l'étude des capacités de combustion et de compression des bois de déchets en présence ou non d'additifs. Plus particulièrement, concerne l'analyse des effets des boues de marbrerie et des boues d'épuration sur les propriétés mécaniques des granulés de bois de déchets, sur les émissions engendrées par leur combustion et enfin, sur le comportement desdits granulés pendant la combustion.

Différentes normes nationales (DIN 51731, NF...) ou européenne caractérisent ces granulés, et dans le but d'offrir une combustion optimale.

Ainsi, de tels granulés doivent bien souvent respecter les paramètres suivants :
- paramètres dimensionnels : un diamètre d'environ 6mm ou 8mm, généralement de longueur inférieure à 30 mm,
- une humidité inférieure à 10%,
- une quantité en cendre limitée après combustion,
- une masse volumique apparente supérieure à 600 kg/m3,
- une limite inférieure sur le pouvoir calorifique,
- une limite supérieure sur la quantité des fines rentrant dans la composition du granulé, et encore,
- un paramètre inférieur sur la résistance au choc du granulé.

Aujourd'hui, et à la connaissance de l'inventeur, les particules de bois utilisées comme matière première dans la composition de granulés sont de la sciure, provenant exclusivement d'opération sur du bois propre (c'est-à-dire dépourvu de polluants tels que peinture, vernis ou colle), bien souvent d'origine forestière, ou encore de déchets d'origine agricole

Selon les constatations de l'inventeur, le coût d'achat de sciure ou autres particules de bois brut entrant dans la fabrication de granulé bois énergétique est relativement important, ce qui impacte défavorablement le coût de revient de fabrication de tels granulés.

L'objectif poursuivi par l'inventeur est de proposer un procédé de fabrication de granulés de bois permettant l'obtention d'un granulé de coût de revient inférieur à celui de l'état de la technique ci-dessus mentionné.

Un autre but de la présente invention est de proposer un granulé bois, en tant que tel, obtenu par la mise en oeuvre du procédé, de coût de revient inférieur.

D'autres buts et avantages apparaîtront au cours de la description qui n'est donnée qu'à titre indicatif et qui n'a pas pour but de la limiter.

L'invention concerne tout d'abord un procédé de fabrication de granulés combustibles, par compression de particules de bois à l'état défibré.

Selon l'invention, on utilise comme matière entrant dans la composition des granulés, un mélange de bois entre un premier stock de bois adjuvanté, y compris du bois peint et/ou vernis et/ou avec colle contenant des composés organiques volatiles non naturels et/ou des métaux lourds, et un deuxième stock de bois non adjuvanté dépourvu de composés organiques non naturels et dépourvu de métaux lourds.

Selon un mode de réalisation, le bois adjuvanté du premier stock est choisi parmi les panneaux agglomérés, les bois d'ameublement, les bois de démolition exempts de gravats, ou un mélange de ceux-ci.

Selon un mode de réalisation, le deuxième stock de bois non adjuvanté comprend :- des grumes de bois, et/ou- du bois vert et/ou,- des plaquettes de bois non traité et non souillé. On dose et on mélange le bois adjuvanté du premier stock de bois adjuvanté, et du second stock de bois non adjuvanté, selon un ratio spécifique bois adjuvanté/bois non adjuvanté.Le ratio spécifique de bois adjuvanté/bois non adjuvanté est inférieur ou égal à 30% en masse.

Selon un premier mode de réalisation, on réalise l'étape de dosage et de mélange entre le bois adjuvanté et le bois non ajduvanté, le bois étant à l'état non-défibré, et on réalise une étape de défibrage du mélange du bois, obtenant un mélange de bois défibré.

Alternativement et selon un deuxième mode de réalisation, on défibre indépendamment le bois adjuvanté du premier stock S1, d'une part, et le bois non adjuvanté du second stock S2, d'autre part, puis on procède au mélange de bois adjuvanté défibré et du bois non adjuvanté défibré, selon le ratio déterminé, à l'état défibré, obtenant un mélange de bois défibré. On sèche le mélange de bois défibré et on transforme le mélange défibré et séché en lesdits granulés, par compression.

Selon des caractéristiques optionnelles de l'invention, prises seules ou en combinaison :-l'étape de séchage du mélange bois défibré est mise en oeuvre dans une installation de séchage comprenant un sécheur, par échange thermique, entre un gaz chaud et le mélange de bois défibré entrainé par le gaz chaud, ladite installation de séchage présentant un dispositif de traitement et de dépollution du flux de gaz d'exhaure de l'installation de séchage, avant rejet dans l'atmosphère ;- on alimente en ledit gaz chaud le sécheur, à une température comprise entre 300°C et 450°C, plus particulièrement comprise entre 350°C et 400°C ;- on choisit un sécheur à tambour rotatif, multi-passe, comprenant plusieurs cylindres concentriques, et de préférence un sécheur à trois passes comprenant trois cylindres concentriques ;- on sépare le bois défibré séché entrainé par le flux de gaz en sortie du sécheur, par cyclonage du flux dans un séparateur à cyclone de l'installation de séchage, obtenant, d'une part, le mélange défibré et séché, rejeté par le séparateur à cyclone, et d'autre part, un flux de gaz d'exhaure en sortie du séparateur à cyclone ;- le gaz chaud en entrée du sécheur est généré par un foyer de combustion de l'installation de séchage, présentant une entrée pour un combustible et au moins une entrée pour un flux d'air de combustion pulsé;- on recycle une partie du flux de gaz d'exhaure dudit séparateur à cyclones comme gaz de dilution en entrée dudit foyer de combustion, ladite autre partie du flux d'exhaure étant dirigée vers ledit dispositif de traitement et de dépollution ;- on utilise comme combustible dans le foyer de combustion de l'installation de séchage une biomasse non polluée ;
- ladite biomasse non polluée est choisie parmi des plaquettes de bois vert et/ou de l'écorce de bois, notamment d'humidité comprise entre 35% et 55% ;
- ledit dispositif de traitement et de dépollution est un dispositif laveur, opérant une dépollution et un dépoussiérage du flux de gaz d'exhaure de l'installation de séchage par projection d'un liquide sur le gaz à traiter ;
- le lavage des gaz par le dispositif laveur générant des boues, on récupère lesdites boues et on les introduits avec le mélange de bois défibré à sécher en entrée du sécheur ;
- l'étape de broyage et de défibrage est mise en oeuvre par un broyeur à tambour rotatif, dont le rotor présente sur sa périphérie des outils de défibrage sous la forme de marteaux, libres en rotation autour d'axes secondaires dudit rotor ;
- les granulés obtenus présentent une humidité inférieure à 10%, et de préférence inférieure à 8% ;
- les granulés présentent une masse volumique supérieure à 600 kg/m³.

L'invention concerne encore l'utilisation des granulés obtenus selon le procédé de l'invention comme combustible dans une installation de combustion pourvue d'un système de traitement des fumées. Les granulés peuvent être utilisés comme combustibles, seuls ou en mélange avec un autre combustible dépourvu de composés organiques non naturels et dépourvu de métaux lourds.

L'invention sera mieux comprise à la lecture de la description suivante accompagnée des dessins en annexe parmi lesquels :
- la figure 1 est un diagramme illustrant schématiquement les différentes étapes du procédé conforme à l'invention, au moins selon un mode de réalisation de l'invention,
- la figure 2 est une vue schématique d'une installation de séchage permettant la mise en oeuvre du procédé de fabrication de granulés selon l'invention.

L'invention est née de la constatation par l'inventeur que le bois utilisé dans la composition de granulé provient exclusivement du traitement de défibrage de bois brut, c'est-à-dire dépourvu de peinture, de colle ou de vernis, qui sont considérés à juste titre comme des polluants en raison des composés volatiles non naturels qu'ils contiennent, avec la présence bien souvent de métaux lourds.

L'invention est encore née de la volonté de l'inventeur de fabriquer un granulé bois énergétique dont le bois entrant dans la composition de tels granulés tolère une partie de bois adjuvanté, à savoir du bois peint et/ou vernis, ou recouvert de colle, et comprenant ainsi des composés organiques volatils non naturels en faible quantité, voire la présence de métaux lourds (exemple cuivre, plomb...).

Le granulé de bois selon l'invention se distinguera de celui de l'état de technique par une faible teneur en composés organiques volatils (en abrégé COV), non naturels, voire une faible teneur en métaux lourds.

On entend par composé organique non naturel, les composés organiques volatiles ne se trouvant pas naturellement dans le bois, et par opposition aux composés organiques naturels tels que les terpènes provenant de conifères et l'isoprène issu des arbres à feuilles caduques, type chêne ou hêtre.

Son utilisation comme combustible se limitera donc de préférence aux équipements de combustion (tels que chaudières) pourvus d'un système de traitement et de dépollution contre les COV : les granulés selon l'invention trouvent ainsi une application particulière dans les chaudières de centrale thermique pour la production d'électricité qui sont pourvues de tels systèmes de traitement des fumées, avant rejet des fumées traitées dans l'atmosphère.

Ce bois faiblement adjuvanté, à moindre coût, peut venir typiquement de filière de collecte de déchets et recyclage, et peut ainsi comprendre, seul ou en mélange :
- des panneaux agglomérés,
- des bois d'ameublement,
- des bois de démolition, exempts de gravât,
- des résidus d'exploitation forestière.

En France, et pour l'homme du métier du traitement de déchet et du recyclage de bois, ce bois faiblement adjuvanté entre dans les bois dits de classe B qui sont considérés comme des déchets non dangereux.

Ce bois faiblement adjuvanté, à moindre coût, permet de faire baisser les coûts de revient du granulé.

Aussi, l'invention concerne tout d'abord un procédé de fabrication de granulés combustibles, par compression de particules de bois à l'état défibré.

Selon l'invention, on utilise comme matière entrant dans la composition des granulés, un mélange de bois entre un premier stock de bois adjuvanté S1, y compris du bois peint et/ ou vernis et/ou avec colle contenant des composés organiques volatiles non naturels et/ou des métaux lourds, et un deuxième stock de bois S2 non adjuvanté dépourvu de composés organiques non naturels et dépourvu de métaux lourds.

Le bois du premier stock S1 est un bois adjuvanté qui est peint, et/ou vernis, et/ou pourvu de colle, et qui comprend ainsi des composés organiques volatils non naturels (abrégé COV) dus typiquement à l'utilisation de solvants organiques dans certains vernis, peintures ou colles. Ce bois peut encore comprendre des métaux lourds. Ce bois est typiquement choisi parmi les panneaux agglomérés, les bois d'ameublement, les bois de démolition exempts de gravats, ou un mélange de ceux-ci, à savoir différents bois provenant typiquement d'une filière de collecte de déchet et recyclage.

Ce bois adjuvanté provenant du premier stock est donc un bois faiblement pollué qui entre dans la composition du granulé à une
teneur comprise entre 5% et 30%. Ce bois adjuvanté est d'humidité typiquement comprise entre 20% et 30%. On dose et on mélange le bois adjuvanté du premier stock S1 de bois adjuvanté, et du second stock de bois S2 non adjuvanté, selon un ratio
spécifique bois adjuvanté/bois non adjuvanté, et qui se retrouvera dans la composition finale du granulé obtenu selon le procédé.

Le bois non adjuvanté provenant du deuxième stock S2 peut comprendre :
- des grumes de bois S2₁, notamment d'humidité comprise entre 40% et 50%, et/ou
- du bois vert S2₂, notamment d'humidité comprise entre 45% et 55%, et/ou,
- des plaquettes de bois non traité et non souillé S2₃, notamment d'humidité comprise entre 20% et 30%.

Les plaquettes de bois non traité et non souillé peuvent provenir du recyclage de bois brut tel que le bois de palettes. En France, et pour l'homme du métier du traitement de déchet et du recyclage de bois, ce bois non traité et non souillé entre dans les bois de classe A. Ce bois non adjuvanté est un bois dépourvu de composé organique volatil non naturel et dépourvu de métaux lourds, et comme celui entrant traditionnellement dans la composition des granulés énergétiques de l'état de la technique.

Selon un premier mode de réalisation, il est possible de défibrer indépendamment le bois adjuvanté du premier stock S1, d'une part, et le bois non adjuvanté du second stock S2, d'autre part, puis de procéder au mélange du bois adjuvanté défibré, d'une part, et du bois non adjuvanté défibré, d'autre part, selon le ration déterminé, à l'état défibré, obtenant ainsi un mélange de bois défibré.

Selon un deuxième mode de réalisation, alternatif, illustré à titre d'exemple non limitatif aux figures, on réalise l'étape de dosage et de mélange entre le bois adjuvanté et le bois non ajduvanté, le bois étant alors à l'état non-défibré, en particulier sous la forme de plaquette, préalablement à une étape de défibrage du mélange du bois et on réalise successivement l'étape de défibrage du mélange du bois, obtenant un mélange de bois défibré.

Dans les deux cas (selon le premier mode de réalisation ou alternativement selon le second mode de réalisation) on sèche le mélange de bois défibré et on transforme le mélange défibré et séché en lesdits granulés, par compression.

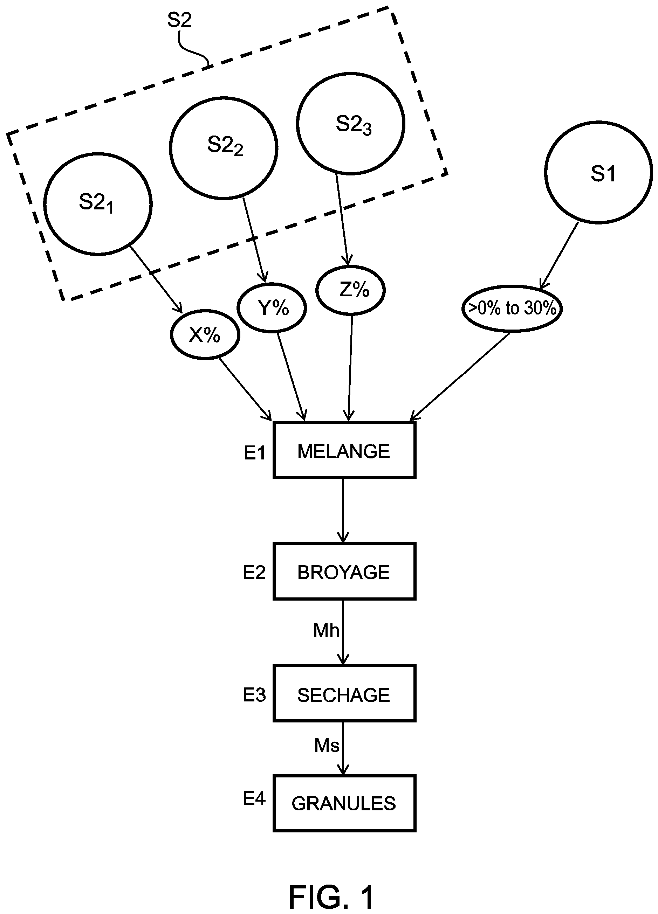

Par exemple, et selon un exemple conforme au mode de réalisation illustré à titre indicatif à la figure 1, le procédé peut comprendre l'ensemble des étapes suivantes :- disposer d'un premier stock de bois S1, adjuvanté, y compris du bois peint et/ou vernis et/ou avec colle, contenant des composés organiques volatils non naturels et/des métaux lourds,- disposer d'un deuxième stock de morceaux de bois S2, non adjuvanté, dépourvu des composés organiques volatils non naturels et de métaux lourds,- ladite étape de dosage et mélange E1 des morceaux de bois adjuvantés provenant du premier stock de bois et du bois non adjuvanté provenant du deuxième stock selon un ratio déterminé, à l'état non défibré, et par exemple de sorte que la proportion de bois adjuvanté dans le mélange de bois soit inférieure à 50% en masse, et de préférence inférieure ou égale à 30%,- une étape de broyage et de défibrage E2 du mélange de bois, obtenant un mélange de bois défibré Mh,- une étape de séchage E3 du mélange de bois défibré Mh, obtenant un mélange de bois défibré et séché Ms,- une étape de transformation E4 du mélange défibré et séché Ms en lesdits granulés, par compression.

D'une manière générale, l'étape de broyage et de défibrage E2 peut être mise en oeuvre par un broyeur dont le rotor présente sur sa circonférence des outils de défibrage sous la forme de marteaux, typiquement libres en rotation autour d'axes secondaires dudit rotor, et parallèles à l'axe de rotation principale dudit rotor.

L'étape de séchage E3 du mélange bois défibré Mh est mise en oeuvre dans une installation de séchage 1 qui comprend un sécheur 10, par échange thermique, entre un gaz chaud Gc et le mélange de bois défibré Mh entrainé par le gaz chaud.

En raison de la présence de composés organiques volatils et de métaux lourds dans le mélange de bois défibré Mh, ladite installation de séchage 1 présente un dispositif de traitement et de dépollution 20 du flux de gaz d'exhaure Exh, adapté pour traiter ces
COV. Le dispositif de traitement et de dépollution 20 peut comprendre un dispositif laveur, opérant une dépollution et un dépoussiérage du flux de gaz d'exhaure Exh de l'installation 10 par projection d'un liquide sur le gaz à traiter, piégeant ainsi les COV et les métaux lourds, au moins en partie. Le lavage des gaz par le dispositif laveur générant des boues Be, on peut récupérer lesdites boues Be et on peut les introduire avec le mélange de bois défibré Mh à sécher en entrée du sécheur 10.

La température du gaz chaud Gc alimentant l'entrée du sécheur 10 est inférieure à 600°C, en ce que les composés organiques naturellement contenus dans le bois (par exemple terpène) sont gazéifiés au-delà de 600°C. Selon un mode de réalisation on alimente en ledit gaz chaud Gc du sécheur rotatif 20, à une température comprise entre 300°C et 450°C, plus particulièrement comprise entre 350°C et 400°C. Ces faibles températures permettent d'éviter la formation d'aldéhydes.

Selon un mode de réalisation avantageux, on choisit un sécheur 10 à tambour rotatif, et en particulier un sécheur à tambour rotatif multi-passe, comprenant plusieurs cylindres concentriques, et de préférence un sécheur à trois passes comprenant trois cylindres concentriques 11, 12, 13.

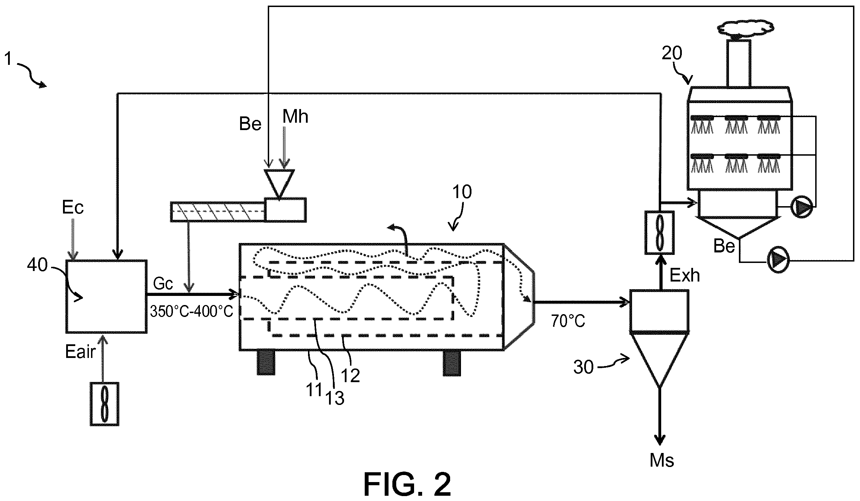

La matière à sécher traverse successivement, et selon un trajet de la matière illustré en pointillés à la figure 2 :
- le premier passage, défini par le volume interne du cylindre de plus petit diamètre, dit cylindre intérieur, repéré 13, le flux de matière se déplaçant notamment d'une extrémité à l'autre du cylindre intérieur 13,
- le deuxième passage défini entre le cylindre intermédiaire 12 et le cylindre intérieur 13, le flux de matière se déplaçant d'une extrémité à l'autre du cylindre intermédiaire 12,
- le troisième passage défini entre le cylindre extérieur 11 et le cylindre intermédiaire 12.

La vitesse du gaz chaud à l'intérieur des trois passages, et en particulier le long du premier passage réalise une sélection granulométrique entre les particules fines et grossières, en ce que les fines de bois sont transportées bien plus rapidement que les grossières le long du premier passage. Cela permet aux fines d'arriver rapidement aux passages suivants (deuxième et troisième passage), où les températures du gaz sont inférieures. Ce faible temps de séjour des fines dans le premier passage permet d'éviter (ou à tout le moins de limiter) leur brûlage, et dans le même objectif de réduction de COV à l'état gazeux et de limitation de poussières inférieure à 20 micromètres qui ne pourront pas facilement être séparés du flux de gaz par cyclonage.

On sépare le bois défibré et séché entrainé par le flux de gaz en sortie du sécheur, par cyclonage du flux dans un séparateur à cyclone 30 de l'installation de séchage 1, obtenant, d'une part, le mélange défibré et séché Ms, rejeté par le séparateur à cyclone 30, et d'autre part, un flux de gaz d'exhaure Exh en sortie du séparateur à cyclone 30. Le gaz chaud Gc en entrée du sécheur 10 est généré par un foyer de combustion 40 de l'installation de séchage, présentant une entrée Ec pour un combustible et au moins une entrée Eair pour un flux d'air de combustion pulsé.

On utilise comme combustible dans le foyer de combustion 40 de l'installation de séchage 1 une biomasse non polluée, c'est-à-dire dépourvu de composés volatils non naturels. Par exemple, ladite biomasse non polluée est choisie parmi des plaquettes de bois vert et/ou de l'écorce de bois, d'humidité typiquement comprise entre 35% et 55%. Avantageusement, on peut recycler une partie du flux de gaz d'exhaure dudit dispositif séparateur comme gaz de dilution en entrée dudit foyer de combustion 40, ladite autre partie du flux d'exhaure étant dirigée vers ledit dispositif de traitement et de dépollution 20.

Le recyclage d'une partie du flux de gaz d'exhaure présente un triple avantage en ce qu'un tel recyclage permet de :
- diminuer la teneur en oxygène du gaz chaud Gc généré par le foyer de combustion, et ainsi les risques de départ de feux dans l'installation de séchage,
- augmenter le rendement énergétique du foyer de combustion, et encore, avantageusement
- éliminer les composés organiques volatils présents dans la partie du flux d'exhaure recyclé au foyer de combustion, par brûlage des composés en raison des hautes températures du foyer de combustion.

Ainsi et, selon un mode de réalisation, le séchage des particules de bois du mélange limitera l'émission de polluant dans l'atmosphère, par la mise en oeuvre de tout ou partie des choix suivants :
- la présence d'un dispositif de traitement et de dépollution 20, avant rejet à l'atmosphère, convenant pour piéger les COV, voire les métaux lourds.
- la qualité du combustible utilisé au foyer de combustion 40, à savoir une biomasse non polluée en COV non naturels,
- le recyclage du flux de gaz d'exhaure au foyer de combustion 40, permettant d'éliminer les COV présents dans ce flux recyclé par les hautes températures du foyer de combustion,
- le choix du sécheur à tambour rotatif, multi-passe, opérant une distinction de traitement entre les fines et les grossières.

La recette du mélange de bois, à savoir les différents pourcentages des bois utilisés composant la recette, peut être réglée. A cet effet, les différents stocks de bois, à savoir premier stock S1 et deuxième stock S2 (ainsi que les sous-stocks S2₁, S2₂, S2₃) peuvent notamment se présenter chacun sous la forme de plaquettes de bois à l'état non défibré, ou encore à l'état défibré, des dispositifs de dosage, tel que vis de transport, permettant d'assurer respectivement l'apport de chacun des constituants, selon un ratio déterminé, et dans le but de réaliser une composition fiable de la recette.

La composition du mélange de bois Mh est déterminée de préférence de manière à bien doser la lignine du bois, la lignine assurant une fonction de liant essentiel lors du processus de granulation. De préférence, on n'ajoute pas d'autre liant non naturel ou même naturel (autre que la lignine déjà présente dans le mélange de bois Mh).

La recette et le processus de granulation peuvent être encore déterminés de manière à respecter les conditions du marché, et en particulier les normes en présence.

Le granulé selon l'invention peut, au moins selon un mode de réalisation respecter, les paramètres dimensionnels (diamètre et longueur du granulé), d'humidité, de masse volumique apparente, de quantité en cendre limitée après combustion, de limite inférieure sur le pouvoir calorifique, de limite supérieure sur la quantité du fines rentrant dans la composition du granulé, et encore de résistance au choc du granulé, imposés par la norme européenne EN 14 961

De manière générale, les granulés obtenus présentent de préférence une humidité inférieure à 10%, et de préférence inférieure à 8% et/ou une masse volumique supérieure à 600 kg/m³.

Le procédé de fabrication de granulés de bois conforme à l'invention, assure avantageusement pour le fabricant de granulés, une possibilité de diversification de ces approvisionnements en matières premières.

Le procédé conforme à l'invention offre encore pour le fabricant une meilleure possibilité de s'adapter à la demande du client final, en modifiant la recette du granulé selon les souhaits du client.

Les granulés conformes à l'invention trouvent une application particulière comme combustibles dans une installation de combustion pourvue d'un système de traitement des fumées.

Ces granulés, faiblement adjuvantés, peuvent être utilisés, seuls, comme combustible dans une chaudière. Dans ce cas, et selon les capacités de traitement des fumées, on peut décider de limiter l'origine du bois adjuvanté dans la composition du granulé, par exemple à un ratio inférieur à 30%.

Les granulés conformes à l'invention peuvent encore être utilisés comme combustibles en mélange avec un autre combustible, de préférence dépourvus de composés organiques non naturels et dépourvus de métaux lourds.

### NOMENCLATURE

1. Installation de séchage de matière particulaire,
10. Sécheur à tambour rotatif,
11, 12, 13. Cylindres concentriques (Sécheur multi-passe),
20. Dispositif de traitement et de dépollution du flux de gaz d'exhaure (Installation de séchage),
30. Séparateur à cyclone,
40. Foyer de combustion,
E1. Etape de dosage et de mélange,
E2. Etape de broyage et de défibrage,
E3. Etape de séchage,
E4. Etape de transformation du mélange défibré et séché en lesdits granulés, par compression (Granulation),
Eair. Entrée d'air de combustion (Foyer de combustion),
Ec. Entrée combustible (Foyer de combustion),
Exh. Flux Exhaure
Mh. Mélange de bois défibré (humide),
Ms. Mélange de bois défibré et séché,
S1. Premier stock de bois adjuvanté,
S2. Deuxième stock de bois non adjuvanté,
S2₁. Sous-stock : grumes de bois
S2₂. Sous-stock : bois vert
S2₃. Sous-stock : plaquettes de bois non traité et non souillé d'humidité comprise entre 20% et 30%.

## Revendications

1. Procédé de fabrication de granulés combustibles présentant une humidité inférieure à 10%, par compression de particules de bois à l'état défibré **caractérisé en ce qu'**on utilise comme matière entrant dans la composition des granulés, un mélange de bois entre un premier stock de bois adjuvanté (S1), y compris du bois peint et/ou vernis et/ou avec colle contenant des composés organiques volatils non naturels et/ou des métaux lourds, et un deuxième stock de bois (S2) non adjuvanté dépourvu de composés organiques non naturels et dépourvu de métaux lourds, procédé dans lequel on dose et on mélange le bois adjuvanté du premier stock (S1) et le
bois non adjuvanté du second stock (S2) selon une teneur en bois adjuvanté dans la composition du granulé comprise entre 5% et 30% en masse,
dans lequel selon une première alternative on réalise le dosage et le mélange du bois adjuvanté du premier stock (S1) et du bois non adjuvanté du second stock (S2), lesdits bois (S1) et (S2) étant à l'état non défibré, et on réalise une étape de défibrage du mélange de bois, obtenant un mélangé défibré, ou selon une seconde alternative, on défibre indépendamment le bois adjuvanté du premier stock (S1) d'une part et le bois non adjuvanté du second stock (S2) d'autre part, puis on procède au mélange du bois adjuvanté du premier stock (S1) défibré et du bois non adjuvanté du second stock (S2) défibré selon ledit ratio spécifique, obtenant un mélange défibré,
et dans lequel on sèche (E3) le mélange de bois défibré (Mh) obtenu selon la première ou la seconde alternative et on transforme le mélange défibré et séché (Ms) en lesdits granulés par compression,
ladite étape de séchage (E3) du mélange bois défibré (Mh) étant mise en oeuvre dans une installation de séchage (1) comprenant un sécheur (10), par échange thermique, entre un gaz chaud (Gc) et le mélange de bois défibré (Mh) entrainé par le gaz chaud, ladite installation de séchage (1) présentant un dispositif de traitement et de dépollution (20) du flux de gaz d'exhaure (Exh) de l'installation de séchage, avant rejet dans l'atmosphère.

2. Procédé selon la revendication 1, dans lequel le bois adjuvanté du premier stock (S1) est choisi parmi les panneaux agglomérés, les bois d'ameublement, les bois de démolition exempts de gravats, ou un mélange de ceux-ci.

3. Procédé selon la revendication 1 ou 2, dans lequel le deuxième stock de bois non adjuvanté (S2) comprend :
- des grumes de bois (S2₁), et/ou
- du bois vert (S2₂) et/ou,
- des plaquettes de bois non traité et non souillé (S2₃).

4. Procédé selon l'une des revendications 1 à 3, dans lequel selon la première possibilité, on réalise l'étape de dosage et de mélange entre le bois adjuvanté et le bois non ajduvanté, le bois étant à l'état non-défibré, et on réalise une étape de défibrage du mélange du bois, obtenant un mélange de bois défibré.

5. Procédé selon l'une des revendications 1 à 3 dans lequel selon la deuxième possibilité, on défibre indépendamment le bois adjuvanté du premier stock S1, d'une part, et le bois non adjuvanté du second stock S2, d'autre part, puis on procède au mélange de bois adjuvanté défibré et du bois non adjuvanté défibré, selon le ratio déterminé, obtenant un mélange de bois défibré.

6. Procédé selon l'une des revendications 1 à 5, dans lequel on alimente en ledit gaz chaud (Gc) le sécheur (10), à une température comprise entre 300°C et 450°C, plus particulièrement comprise entre 350°C et 400°C.

7. Procédé selon l'une des revendications précédentes, dans lequel on choisit un sécheur à tambour rotatif (10), multi-passe, comprenant plusieurs cylindres concentriques, et de préférence un sécheur à trois passes comprenant trois cylindres concentriques (11, 12, 13).

8. Procédé selon l'une des revendications précédentes, dans lequel on sépare le bois défibré séché entrainé par le flux de gaz en sortie du sécheur (10), par cyclonage du flux dans un séparateur à cyclone (30) de l'installation de séchage (1), obtenant, d'une part, le mélange défibré et séché (Ms), rejeté par le séparateur à cyclone (30), et d'autre part, un flux de gaz d'exhaure (Exh) en sortie du séparateur à cyclone (30).

9. Procédé selon l'une des revendications précédentes, dans lequel le gaz chaud (Gc) en entrée du sécheur (10) est généré par un foyer de combustion (40) de l'installation de séchage, présentant une entrée (Ec) pour un combustible et au moins une entrée (Eair) pour un flux d'air de combustion pulsé.

10. Procédé selon la revendication 8, dans lequel on recycle une partie du flux de gaz d'exhaure dudit séparateur à cyclones (30) comme gaz de dilution en entrée dudit foyer de combustion (40), ladite autre partie du flux d'exhaure étant dirigée vers ledit dispositif de traitement et de dépollution (20).

11. Procédé selon l'une des revendications précédentes, dans lequel on utilise comme combustible dans le foyer de combustion (40) de l'installation de séchage (1) une biomasse non polluée.

12. Procédé selon la revendication 11, dans lequel ladite biomasse non polluée est choisie parmi des plaquettes de bois vert et/ou de l'écorce de bois, d'humidité comprise entre 35% et 55%.

13. Procédé selon l'une des revendications précédentes, dans lequel ledit dispositif de traitement et de dépollution (20) est un dispositif laveur, opérant une dépollution et un dépoussiérage du flux de gaz d'exhaure (Exh) de l'installation de séchage (10) par projection d'un liquide sur le gaz à traiter.

14. Procédé selon la revendication 13, dans lequel le lavage des gaz par le dispositif laveur générant des boues (Be), et dans lequel on récupère lesdites boues (Be) et on les introduits avec le mélange de bois défibré (Mh) à sécher en entrée du sécheur (10).

15. Procédé selon l'une des revendications 1 à 14, dans lequel l'étape de défibrage (E2) est mise en oeuvre par un broyeur à tambour rotatif, présentant sur sa périphérie des outils de défibrage sous la forme de marteaux, libres en rotation autour d'axes secondaires dudit tambour.

16. Procédé selon l'une des revendications 1 à 15, dans lequel les granulés obtenus présentent une humidité inférieure à 8%.

17. Procédé selon l'une des revendications 1 à 16 dans lequel les granulés présentent une masse volumique supérieure à 600 kg/m³.

18. Granulés bois obtenus par la mise en oeuvre du procédé selon l'une des revendications 1 à 17.

19. Utilisation des granulés obtenus selon le procédé de l'une des revendications 1 à 17 comme combustible dans une installation de combustion pourvue d'un système de traitement des fumées.

20. Utilisation des granulés selon la revendication 18 comme combustible en mélange avec un autre combustible dépourvu de composés organiques non naturels et dépourvu de métaux lourds.

## Patentansprüche

1. Verfahren zur Herstellung von brennbaren Granulaten, die eine Feuchtigkeit unter 10 % aufweisen, durch Kompression von Holzpartikeln im zerfaserten Zustand, **dadurch gekennzeichnet, dass** als Eingangsmaterial in der Zusammensetzung der Granulate ein Holzgemisch zwischen einem ersten Holzvorrat mit Zusatzstoffen (S1), inklusive gestrichenes Holz und/oder Lack und/oder mit Klebstoff, umfassend nicht natürliche flüchtige organische Verbindungen und/oder Schwermetalle, und einem zweiten Holzvorrat (S2) ohne Zusatzstoffe, der keine nicht natürlichen organischen Verbindungen und keine Schwermetalle enthält, verwendet wird, wobei bei dem Verfahren das Holz mit Zusatzstoffen des ersten Vorrats (S1) und das Holz ohne Zusatzstoffe des zweiten Vorrats (S2) gemäß einem Gehalt an Holz mit Zusatzstoffen in der Zusammensetzung des Granulats zwischen 5 Massen-% und 30 Massen-% dosiert und gemischt werden, wobei gemäß einer ersten Alternative die Dosierung und das Mischen des Holzes mit Zusatzstoffen des ersten Vorrats (S1) und des Holzes ohne Zusatzstoffe des zweiten Vorrats (S2) durchgeführt wird, wobei sich das Holz (S1) und (S2) im nicht zerfaserten Zustand befinden, und dass ein Schritt der Zerfaserung des Holzgemisches durchgeführt wird, wodurch ein zerfasertes Gemisch erhalten wird, oder nach einer zweiten Alternative das Holz mit Zusatzstoffen des ersten Vorrats (S1) einerseits und das Holz ohne Zusatzstoffe des zweiten Vorrats (S2) andererseits unabhängig zerfasert werden, dann das Mischen des zerfaserten Holzes mit Zusatzstoffen des ersten Vorrats (S1) und des zerfaserten Holzes ohne Zusatzstoffe des zweiten Vorrats (S2) gemäß dem spezifischen Verhältnis durchgeführt wird, wodurch ein zerfasertes Gemisch erhalten wird, und wobei das zerfaserte Holzgemisch (Mh), das nach der ersten oder der zweiten Alternative erhalten wird, getrocknet wird (E3), und das zerfaserte und getrocknete Gemisch (Ms) in die Granulate durch Kompression umgeformt wird, wobei der Trocknungsschritt (E3) des zerfaserten Holzgemisches (Mh) in einer Trocknungsanlage (1) eingesetzt wird, umfassend einen Trockner (10) durch Wärmeaustausch zwischen einem heißen Gas (Gc) und dem zerfaserten Holzgemisch (Mh), das von dem heißen Gas mitgenommen wird, wobei die Trocknungsanlage (1) eine Vorrichtung zur Behandlung und Reinigung (20) des Abgasstroms (Exh) der Trocknungsanlage vor dem Ausstoß in die Atmosphäre aufweist.

2. Verfahren nach Anspruch 1, bei dem das Holz mit Zusatzstoffen des ersten Vorrats (S1) unter den Spanplatten, den Holzeinrichtungen, dem Abbruchholz ohne Schutt oder einem Gemisch derselben ausgewählt ist.

3. Verfahren nach Anspruch 1 oder 2, bei dem der zweite Vorrat von Holz ohne Zusatzstoffe (S2) umfasst:
- Holzstämme (S2₁) und/oder
- Frischholz (S2₂) und/oder
- Platten aus unbehandeltem und nicht verunreinigtem Holz (S2₃).

4. Verfahren nach einem der Ansprüche 1 bis 3, bei dem gemäß der ersten Möglichkeit der Schritt der Dosierung und des Mischens zwischen dem Holz mit Zusatzstoffen und dem Holz ohne Zusatzstoffe durchgeführt wird, wobei sich das Holz im nicht zerfaserten Zustand befindet, und ein Schritt der Zerfaserung des Holzgemisches durchgeführt wird, wodurch ein zerfasertes Holzgemisch erhalten wird.

5. Verfahren nach einem der Ansprüche 1 bis 3, bei dem gemäß der zweiten Möglichkeit das Holz mit Zusatzstoffen des ersten Vorrats (S1) einerseits und das Holz ohne Zusatzstoffe des zweiten Vorrats (S2) andererseits unabhängig zerfasert werden, dann das Mischen von zerfasertem Holz mit Zusatzstoffen und des zerfaserten Holzes ohne Zusatzstoffe gemäß dem bestimmten Verhältnis durchgeführt wird, wodurch ein zerfasertes Holzgemisch erhalten wird.

6. Verfahren nach einem der Ansprüche 1 bis 5, bei dem der Trockner (10) mit dem heißen Gas (Gc) mit einer Temperatur zwischen 300 °C und 450 °C, insbesondere zwischen 350 °C und 400 °C, versorgt wird.

7. Verfahren nach einem der vorhergehenden Ansprüche, bei dem ein Mehrweg-Drehtrommeltrockner (10), umfassend mehrere konzentrische Zylinder, und vorzugsweise ein Dreiweg-Trockner, umfassend drei konzentrische Zylinder (11, 12, 13) gewählt wird.

8. Verfahren nach einem der vorhergehenden Ansprüche, bei dem das von dem Gasstrom am Ausgang des Trockners (10) mitgenommene getrocknete zerfaserte Holz durch Zyklonieren des Stroms in einem Zyklonabscheider (30) der Trocknungsanlage (1) getrennt wird, wobei einerseits das zerfaserte und getrocknete Gemisch (Ms), das vom Zyklonabscheider (30) ausgeworfen wird, und andererseits ein Abgasstrom (Exh) am Ausgang des Zyklonabscheiders (30) erhalten wird.

9. Verfahren nach einem der vorhergehenden Ansprüche, bei dem das heiße Gas (Gc) am Eingang des Trockners (10) durch einen Verbrennungsofen (40) der Trocknungsanlage erzeugt wird, der einen Eingang (Ec) für einen Brennstoff und mindestens einen Eingang (Eair) für einen pulsierenden Verbrennungsluftstrom aufweist.

10. Verfahren nach Anspruch 8, bei dem ein Teil des Abgasstroms des Zyklonabscheiders (30) als Verdünnungsgase am Eingang des Verbrennungsofens (40) wiederverwertet wird, wobei der andere Teil des Abgasstroms zu der Behandlungs- und Reinigungsvorrichtung (20) geleitet wird.

11. Verfahren nach einem der vorhergehenden Ansprüche, bei dem als Brennstoff in dem Verbrennungsofen (40) der Trocknungsanlage (1) nicht verunreinigte Biomasse verwendet wird.

12. Verfahren nach Anspruch 11, bei dem die nicht verunreinigte Biomasse unter Platten von Frischholz und/oder der Holzrinde ausgewählt ist, mit einer Feuchtigkeit zwischen 35 % und 55 %.

13. Verfahren nach einem der vorhergehenden Ansprüche, bei dem die Behandlungs- und Reinigungsvorrichtung (20) eine Waschvorrichtung ist, die eine Reinigung und Entstaubung des Abgasstroms (Exh) der Trocknungsanlage (10) durch Spritzen einer Flüssigkeit auf das zu behandelnde Gas durchführt.

14. Verfahren nach Anspruch 13, bei dem das Waschen der Gase durch die Waschvorrichtung Schlamm (Be) erzeugt, und bei dem der Schlamm (Be) wiedergewonnen und mit dem zu trocknenden zerfaserten Holzgemisch (Mh)am Eingang des Trockners (10) eingeleitet wird.

15. Verfahren nach einem der Ansprüche 1 bis 14, bei dem der Schritt der Zerfaserung (E2) durch eine Drehtrommelmühle eingesetzt wird, die an ihrer Peripherie Zerfaserungswerkzeuge in Form von Hämmern umfasst, die um Hilfsachsen der Trommel frei drehbar sind.

16. Verfahren nach einem der Ansprüche 1 bis 15, bei dem die erhaltenen Granulate eine Feuchtigkeit unter 8 % aufweisen.

17. Verfahren nach einem der Ansprüche 1 bis 16, bei dem die Granulate eine Volumenmasse über 600 kg/m³ aufweisen.

18. Holzgranulate, die durch den Einsatz des Verfahrens nach einem der Ansprüche 1 bis 17 erhalten werden.

19. Verwendung der nach dem Verfahren eines der Ansprüche 1 bis 17 erhaltenen Granulate als Brennstoff in einer Verbrennungsanlage, die mit einem Rauchgasbehandlungssystem versehen ist.

20. Verwendung der Granulate nach Anspruch 18 als Brennstoff im Gemisch mit einem weiteren Brennstoff, der keine nicht natürlichen organischen Verbindungen und keine Schwermetalle aufweist.

## Claims

1. A method for manufacturing combustible pellets having a moisture content of less than 10%, by compressing wood particles in a defibrated state, **characterized in that** the material used in the composition of the pellets is a mixture of woods between a first stock of adjuvanted wood (S1), including wood that is painted and/or varnished and/or with a glue containing non-natural volatile organic compounds and/or heavy metals, and a second stock of non-adjuvanted wood (S2) which is free of non-natural organic compounds and free of heavy metals, in which method the adjuvanted wood from the first stock (S1) and the non-adjuvanted wood from the second stock (S2) are dosed and mixed according to an adjuvanted wood content in the pellet composition that is comprised between 5% and 30% by mass,
wherein according to a first alternative the dosage and mixing of the adjuvanted wood from the first stock (S1) and the non-adjuvanted wood from the second stock (S2) are carried out, said woods (S1) and (S2) being in a non-defibrated state, and a step of defibrating the adjuvanted wood from the first stock (S1) is carried out, resulting in a defibrated mixture, or according to a second alternative, the adjuvanted wood from the first stock (S1) on the one hand and the non-adjuvanted wood from the second stock (S2) on the other hand are independently defibrated, and then the defibrated adjuvanted wood from the first stock (S1) and the defibrated non-adjuvanted wood from the second stock (S2) are mixed according to said specific ratio, resulting in a defibrated mixture,
and wherein the resulting defibrated wood mixture (Mh) according to the first or second alternative is dried (E3) and the defibrated and dried mixture (Ms) is transformed into said pellets by compression,
said step of drying (E3) the defibrated wood mixture (Mh) being implemented in a drying facility (1) comprising a dryer (10), by thermal exchange, between a hot gas (Gc) and the defibrated wood mixture (Mh) driven by the hot gas, said drying facility (1) having a device for the processing and pollution control (20) of the flow of exhaust gas (Exh) from the drying facility before it is discharged into the atmosphere.

2. The method according to Claim 1, wherein the adjuvanted wood from the first stock (S1) is selected among chipboard panels, furniture wood, demolition wood that is free of rubble, or a mixture thereof.

3. The method according to Claim 1 or 2, wherein the second stock of non-adjuvanted wood (S2) comprises:
- wooden logs (S21), and/or
- green wood (S22), and/or
- unprocessed and unspoiled wood chips (S23).

4. The method according to one of Claims 1 to 3, wherein according to the first possibility, the step of dosing and mixing between the adjuvanted wood and the non-adjuvanted wood is carried out, the wood being in a non-defibrated state, and a step of defibrating the wood mixture is carried out, resulting in a of defibrated wood mixture.

5. The method according to one of Claims 1 to 3 wherein according to the second possibility, the adjuvanted wood from the first stock S1, on the one hand, and the non-adjuvanted wood from the second stock S2, on the other hand, are independently defibrated, and then the defibrated adjuvanted wood and the defibrated non-adjuvanted wood are mixed, according to the determined ratio, resulting in a defibrated wood mixture.

6. The method according to one of Claims 1 to 5, wherein said hot gas (Gc) is supplied to the dryer (10) at a temperature comprised between 300°C and 450°C, more particularly comprised between 350°C and 400°C.

7. The method according to one of the previous claims, wherein a multi-pass rotary drum dryer (10), comprising several concentric cylinders, and preferably a three-pass dryer comprising three concentric cylinders (11, 12, 13), is chosen.

8. The method according to one of the previous claims, wherein the dried defibrated wood that is driven by the flow of gas from the dryer (10) is separated by cycloning the flow in a cyclone separator (30) of the drying facility (1), which results, on the one hand, in the defibrated and dried mixture (Ms) discharged by the cyclone separator (30) and, on the other hand, in a flow of exhaust gas (Exh) at the outlet from the cyclone separator (30).

9. The method according to one of the previous claims, wherein the hot gas (Gc) at the inlet of the dryer (10) is generated by a combustion furnace (40) in the drying facility, having an inlet (Ec) for a fuel and at least one inlet (Eair) for a pulsed combustion air flow.

10. The method according to Claim 8, wherein a portion of the flow of exhaust gas from said cycline separator (30) is recycled as dilution gas at the inlet of said combustion furnace (40), said other portion of the exhaust flow being directed towards said treatment and depollution device (20).

11. The method according to one of the previous claims, wherein a non-polluted biomass is used as fuel in the combustion furnace (40) of the drying facility (1).

12. The method according to Claim 11, wherein said non-polluted biomass is selected from green wood chips and/or wood bark, with a moisture content comprised between 35% and 55%.

13. The method according to one of the previous claims, wherein said processing and depollution device (20) is a washing device, performing a depollution and a dedusting of the flow of exhaust gas (Exh) from the drying facility (10) by projecting a liquid onto the gas to be processed.

14. The method according to Claim 13, wherein the washing of the gases by the washing device generating sludges (Be), and wherein said sludges (Be) are collected and introduced with the defibrated wood mixture (Mh) to be dried at the inlet of the drier (10).

15. The method according to one of Claims 1 to 14, wherein the defibrating step (E2) is implemented by a rotary drum mill grinder, having at its periphery defibrating tools in the form of hammers, which are freely rotatable about secondary axes of said drum.

16. The method according to one of Claims 1 to 15, wherein the resulting pellets have a moisture content of less than 8%.

17. The method according to one of Claims 1 to 16, wherein the pellets have a density greater than 600 kg/m3.

18. Wood pellets obtained by the implementation of the method according to one of Claims 1 to 17.

19. A use of the pellets obtained by the method according to any of Claims 1 to 17 as fuel in a combustion facility provided with a smoke processing system.

20. A use of the pellets according to Claim 18 as a fuel in admixture with another fuel that is free of non-natural organic compounds and free of heavy metals.
